# EUROPÄISCHE PATENTANMELDUNG

(11) **EP 2 072 355 A2**
(43) Veröffentlichungstag der Anmeldung: **24.06.2009**
(21) Anmeldenummer: 08105602.0
(22) Anmeldetag: 20.10.2008
(51) Int. Cl.: B60S 1/04

(54) **Wischanlage für ein Kraftfahrzeug sowie Montageverfahren**

(30) Priorität: 19.12.2007 DE 102007061370
(71) Anmelder: ROBERT BOSCH GMBH, 70442 Stuttgart (DE)
(72) Erfinder: Benner, Andreas, 77830, Buehlertal (DE); Pino Joaquin, Jose Carlos, 43720, Arbos del Penedes (ES); Hutzler, Norbert, 08812 Roquetes, Barcelona (ES); Surkamp, Gundolf, 08720, Vilafranca Del Penedes (ES)

(57) **Zusammenfassung**

Die Erfindung betrifft eine Wischanlage (1), für ein Kraftfahrzeug mit einem Befestigungsrohr (2), das an einem Wischerantriebsgehäuse (13) eines Wischerantriebs (10) festgelegt ist. Erfindungsgemäß ist vorgesehen, dass das Wischerantriebsgehäuse (13) mit mindestens einem Keil (14, 15) form- und/oder reibschlüssig am Befestigungsrohr (2) festgelegt ist. Ferner betrifft die Erfindung ein Montageverfahren.

## Beschreibung

### Stand der Technik

Die Erfindung betrifft eine Wischanlage für ein Kraftfahrzeug gemäß dem Oberbegriff des Anspruchs 1, die Verwendung eines Keils gemäß Anspruch 11 sowie ein Montageverfahren gemäß dem Oberbegriff des Anspruchs 12.

Frontwischanlagen weisen in der Regel ein endseitig an der Fahrzeugkarosserie festlegbares Befestigungsrohr auf, an dem neben einem Kurbelgestänge ein Wischerantrieb festgelegt ist. Dabei umfasst der Wischerantrieb einen elektrischen Antriebsmotor und ein von diesem angetriebenes Getriebe. Zum Festlegen des Wischerantriebs am Befestigungsrohr ist es bekannt, eine Schweißverbindung zu realisieren. Alternativ ist es bekannt, das Befestigungsrohr mit Hilfe einer mit dem Wischerantriebsgehäuse verschraubten Platte zu klemmen. Weiterhin sind Wischanlagen für Kraftfahrzeuge bekannt, bei denen das Befestigungsrohr mit Hilfe von das Befestigungsrohr durchsetzenden Befestigungsschrauben festgelegt ist. Üblicherweise ist das Befestigungsrohr dabei in einem Befestigungsabschnitt zu einem U-Profil geprägt.

Beim Festlegen der Wischanlage am Befestigungsrohr durch Schweißen ist nachteilig, dass es sich bei einem Schweißprozess um keinen einfach zu überwachenden Fertigungsprozess handelt. Bei den bekannten Klemmverfahren sowie bei dem bekannten Schraubverfahren ist nachteilig, dass der Montageprozess jeweils mindestens zwei Schraubvorgänge umfasst.

Offenbarung der Erfindung Technische Aufgabe

Der Erfindung liegt die Aufgabe zugrunde, eine Wischanlage vorzuschlagen, bei der der Wischerantrieb auf einfache Weise am Befestigungsrohr in einem einfach zu überwachenden Montageprozess festlegbar ist. Bevorzugt soll auf das Vorsehen von Schraubverbindungen zum Festlegen des Wischerantriebs am Befestigungsrohr verzichtet werden können. Ferner besteht die Aufgabe darin, ein beschleunigtes und einfach zu überwachendes Montageverfahren für eine Wischanlage vorzuschlagen.

### Technische Lösung

Diese Aufgabe wird hinsichtlich der Wischanlage mit den Merkmalen des Anspruchs 1 sowie durch eine Verwendung mit den Merkmalen des Anspruchs 11 gelöst. Hinsichtlich des Montageverfahrens wird die Aufgabe mit den Merkmalen des Anspruchs 12 gelöst. Vorteilhafte Weiterbildungen der Erfindung sind in den Unteransprüchen angegeben. In den Rahmen der Erfindung fallen auch sämtliche Kombinationen aus zumindest zwei von in der Beschreibung, den Ansprüchen und/oder den Figuren offenbarten Merkmalen. Zur Vermeidung von Wiederholungen sollen vorrichtungsgemäß offenbarte Merkmale auch als verfahrensgemäß offenbart gelten und beanspruchbar sein. Ebenso sollen verfahrensgemäß offenbarte Merkmale auch als vorrichtungsgemäß offenbart gelten und beanspruchbar sein.

Der Erfindung liegt der Gedanke zugrunde, mindestens eine Schraubverbindung zum Festlegen eines Wischerantriebs (Wischermotor und/oder Getriebe, insbesondere Schneckengetriebe) an einem, vorzugsweise endseitig an einer Fahrzeugkarosserie festlegbaren, Befestigungsrohr mindestens einen Keil vorzusehen. Unter einem Keil wird dabei ein Klemmbauteil verstanden, dessen Dickenerstreckung in zumindest einem Längsschnitt in zumindest eine Querrichtung mit zunehmender Längserstreckung abnimmt. Besonders bevorzugt handelt es sich bei dem zum Einsatz kommenden Keil um ein, zumindest näherungsweise, über seine gesamte Längserstreckung spitz zulaufendes Bauteil, wobei der Keil nicht notwendigerweise eine spitze "Spitze" aufweisen muss - es ist auch ein Keil mit einer "gerundeten" Spitze realisierbar. Im Gegensatz zu einer Befestigungsschraube, die entweder in eine Innengewindeöffnung des Gehäuses geschraubt oder mit einer Mutter gekontert werden muss, kann auf einen derartigen Schraubprozess bei einem bevorzugt vollständig gewindefreien Keil verzichtet werden. Der Keil kann auf einfache Weise durch Beaufschlagen des Keils an seiner von der Keilspitze abgewandten Stirnseite mit einer Axialkraft in seine Klemmposition überführt werden, in der der Keil den Wischerantrieb am Befestigungsrohr fixiert. Im Gegensatz zu aus dem Stand der Technik bekannten Klemmverbindungen kann bei dem Einsatz mindestens eines Keils zum Fixieren des Befestigungsrohrs auf ein am Wischerantriebsgehäuse mithilfe von Befestigungsschrauben festzulegendes Klemmblech verzichtet werden. Bevorzugt wird der mindestens eine Keil derart positioniert, dass der Wischerantrieb sowohl gegen eine Relativbewegung zum Befestigungsrohr in Längsrichtung als auch gegen ein Verdrehen relativ zum Befestigungsrohr gesichert ist. Insgesamt wird durch das Vorsehen eines Keils das Montageverfahren der Wischanlage wesentlich vereinfacht und beschleunigt und es ist gut überwachbar. Besonders vorteilhaft ist, dass, im Vergleich zum Stand der Technik, weniger Bauteile gehandhabt werden müssen.

In Weiterbildung der Erfindung ist mit Vorteil vorgesehen, dass der Keil am Außenumfang des Befestigungsrohrs anliegend angeordnet ist - er das Befestigungsrohr also nicht durchsetzt. Hierdurch kann auf einen Montageschritt zum Einbringen einer Durchgangsöffnung in das Befestigungsrohr verzichtet werden. Anders ausgedrückt ist der Keil bevorzugt derart angeordnet, dass das Befestigungsrohr zwischen dem Keil und dem Wischerantriebsgehäuse geklemmt ist.

Um die Kontaktfläche zum Befestigungsrohr möglichst groß auszubilden und damit große Haftreibungskräfte zu realisieren, ist gemäß einer bevorzugten Ausführungsform vorgesehen, dass der Keil, zumindest abschnittsweise, nicht gekrümmt in Umfangsrichtung konturiert ist, sondern mindestens eine Flachseite aufweist, mit der er sich am Außenumfang des Befestigungsrohrs abstützt.

Von besonderem Vorteil ist eine Ausführungsform der Wischanlage, bei der der mindestens eine Keil in Umfangsrichtung, zumindest abschnittsweise, polygonförmig, insbesondere rechteckig, konturiert ist. Anders ausgedrückt ist eine senkrecht zur Längserstreckung des Keils angeordnete Querschnittsfläche nicht gerundet, sondern polygonförmig ausgeformt, bevorzugt derart, dass der Keil sowohl mit einer Flachseite am Befestigungsrohr anliegt als auch an mindestens einem Abschnitt des Wischerantriebsgehäuses.

Von besonderem Vorteil ist eine Ausführungsform, bei der die Klemmwirkung des Keils dadurch erreicht wird, dass dieser bei der Montage die Umfangskontur des Befestigungsrohres (bevorzugt ein Hohlrohr) elastisch und bevorzugt plastisch verformt. Auf diese Weise kann zur Anordnung der Wischanlage im Kraftfahrzeug ein herkömmliches Rundrohr eingesetzt werden, wobei auf einen Formgebungsschritt, beispielsweise zur Ausformung einer U-Kontur, im Befestigungsabschnitt des Befestigungsrohres verzichtet werden kann.

Eine optimale Fixierung des Wischerantriebsgehäuses am Befestigungsrohr kann erreicht werden, wenn sich der Keil quer zur Längserstreckung des Befestigungsabschnittes des Befestigungsrohres erstreckt. Hierdurch wird, insbesondere bei einer entsprechenden Verformung des Befestigungsrohres durch Festlegen des Keils, eine Sicherung gegen ein Längsverschieben des Wischerantriebs relativ zum Befestigungsrohr erzielt. Darüber hinaus wird auf diese Weise eine Verdrehsicherung, selbst bei einem ursprünglich kreisrunden Befestigungsrohr, realisiert.

In Weiterbildung der Erfindung ist mit Vorteil vorgesehen, dass der Keil mindestens eine, vorzugsweise zwei voneinander beabstandete Durchgangsöffnungen im Wischerantriebsgehäuse durchsetzt. Auf diese Weise kann sich der Keil mit einer Seite am Befestigungsrohr und mit der gegenüberliegenden Seite, vorzugsweise an zwei in Längsrichtung des Keils voneinander beabstandeten Stellen, am Wischerantriebsgehäuse abstützen. Bevorzugt ist die mindestens eine Durchgangsöffnung polygonförmig, vorzugsweise rechteckig, konturiert, um somit eine möglichst große Anlagefläche zur Anlage des bevorzugt ebenfalls polygonförmig konturierten Keils bereitzustellen. Bei Bedarf kann eine Durchgangsöffnung durch eine Sacklochöffnung ersetzt werden.

Um zu verhindern, dass sich der Keil während des Fahrbetriebs eines mit der Wischanlage ausgestatteten Kraftfahrzeugs durch unvermeidbare Schwingungen löst, ist gemäß einer bevorzugten Ausführungsform vorgesehen, dass Sicherungsmittel zum Sichern des Keils gegen Lösen vorgesehen sind. Insbesondere sind die Sicherungsmittel derart ausgebildet, dass sie eine Axialbewegung des Keils entgegen seiner Einschlagrichtung verhindern. Dabei können die Sicherungsmittel beispielsweise einen den Keil durchsetzenden Bolzen umfassen, der sich insbesondere am Rand einer Durchgangsöffnung abstützt, durch die der Keil hindurchgeführt ist.

Um eine ausreichende Fixiersicherheit zu gewährleisten, ist mit Vorteil vorgesehen, dass mehr als ein Keil, vorzugsweise ausschließlich zwei in Längsrichtung des Befestigungsrohres voneinander beabstandete Keile, zum Fixieren des Wischerantriebs am Befestigungsrohr vorgesehen sind.

Um möglichst große Anlageflächen für das Befestigungsrohr am Wischerantriebsgehäuse bereitzustellen, ist in Weiterbildung der Erfindung mit Vorteil vorgesehen, dass das Befestigungsrohr nicht einfach am Außenumfang des Wischerantriebsgehäuses aufliegt, sondern dass mindestens eine von dem Befestigungsrohr durchsetzte Aufnahmenut vorgesehen ist, die bevorzugt derart dimensioniert ist, dass das Befestigungsrohr im geklemmten Zustand nicht nur am Nutboden, sondern bevorzugt auch an beiden, insbesondere parallel zueinander verlaufenden, Nutseitenwänden anliegt.

Ferner führt die Erfindung auf die Verwendung eines Keils zum Fixieren eines Wischerantriebsgehäuses an einem, vorzugsweise endseitig an der Fahrzeugkarosserie festlegbaren, Befestigungsrohr. Durch den Einsatz mindestens eines Keils, insbesondere anstelle einer Befestigungsschraube, kann der Montageprozess wesentlich vereinfacht werden. Darüber hinaus wird die Bauteilkomplexität erheblich minimiert. Insbesondere muss im Wischerantriebsgehäuse kein Innengewinde zur Aufnahme eines Außengewindes einer Befestigungsschraube vorgesehen werden.

Darüber hinaus führt die Erfindung auch auf ein optimiertes Montageverfahren zum Festlegen eines Wischerantriebsgehäuses an einem Befestigungsrohr. Das erfindungsgemäße Verfahren zeichnet sich dadurch aus, dass ein Befestigungsrohr und ein Wischerantriebsgehäuse mit Hilfe eines Keils aneinander festgelegt werden. Bevorzugt erfolgt das Aneinander-Festlegen ohne den Einsatz von Befestigungsschrauben.

In Weiterbildung der Erfindung ist mit Vorteil vorgesehen, dass der mindestens eine Keil derart montiert wird, dass dieser dabei die Umfangskontur des, vorzugsweise zuvor kreisförmig konturierten, Befestigungsrohres elastisch und/oder bevorzugt plastisch verformt und so das Befestigungsrohr klemmt, wobei sich der Keil bevorzugt quer zur Längserstreckung des Befestigungsabschnittes des Befestigungsrohres erstreckt.

### Kurze Beschreibung der Zeichnungen

Weitere Vorteile, Merkmale und Einzelheiten der Erfindung ergeben sich aus der nachfolgenden Beschreibung bevorzugter Ausführungsbeispiele sowie anhand der Zeichnungen. Diese zeigen in:
- Fig. 1:: eine als Frontwischanlage ausgebildete Wischanlage für ein Kraftfahrzeug und
- Fig. 2:: eine entlang der Schnittlinie E - E gemäß Fig. 1 teilgeschnittene Darstellung einiger Bauteile der Wischanlage gemäß Fig. 1.

### Ausführungsformen der Erfindung

In den Figuren sind gleiche Bauteile und Bauteile mit der gleichen Funktion mit den gleichen Bezugszeichen gekennzeichnet.

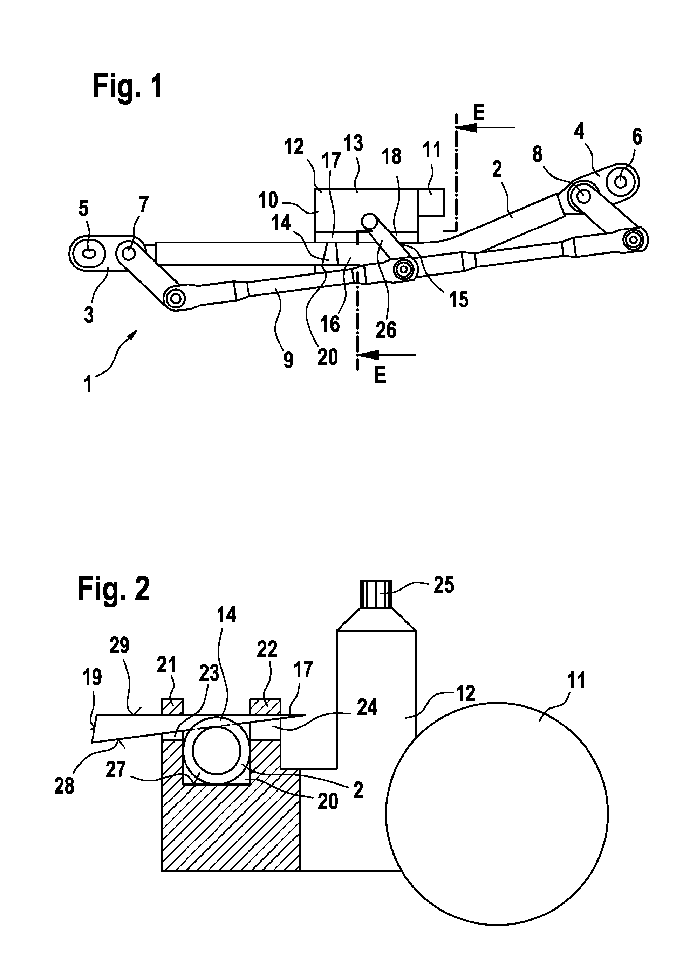

In Fig. 1 ist eine als Frontwischanlage ausgebildete Wischanlage 1 für ein Kraftfahrzeug dargestellt. Die Wischanlage 1 umfasst ein gebogenes, als hohles Rundrohr ausgebildetes Befestigungsrohr 2, das an beiden Enden mit einem Halteelement 3, 4 zum Fixieren der Wischanlage 1 an einer Fahrzeugkarosserie verbunden ist. Jedes Halteelement 3, 4 weist eine Fixieröffnung 5, 6 zur Aufnahme jeweils einer nicht gezeigten Fixierschraube auf.

Ferner ist in jedem Haltelement 3, 4 eine Wischerwelle 7, 8 verdrehbar gelagert. An den Enden der Wischerwellen 7, 8 ist jeweils ein Wischerarm mit einem Wischgummi (nicht gezeigt) montierbar.

Die Wischerwellen 7, 8 sind über ein Kurbelgestänge 9 mit einem Wischerantrieb 10 verbunden. Dieser, lediglich schematisch angedeutete, Wischerantrieb 10 umfasst einen in einem Motorgehäuse 11 angeordneten Elektromotor (nicht gezeigt) sowie ein mit diesem zusammenwirkendes Schneckengetriebe (nicht gezeigt), das in einem Getriebegehäuse 12 angeordnet ist. Dabei ist das Motorgehäuse 11 am Getriebegehäuse 12 angeflanscht und bildet zusammen mit dem Getriebegehäuse 12 ein gemeinsames Wischerantriebsgehäuse 13.

Das Wischerantriebsgehäuse 13 ist mit Hilfe zweier in Längsrichtung des Befestigungsrohres 2 beabstandeter Keile 14, 15, die das Befestigungsrohr 2 in einem geraden Befestigungsabschnitt 16 klemmen, am Befestigungsrohr 2 fixiert. Die Keile 14, 15 verjüngen sich hin zu ihrer jeweiligen Keilspitze 17, 18 und sind durch Beaufschlagen jeweils einer hinteren Stirnfläche 19 (vergleiche Fig. 2) mit einer Axialkraft in die gezeigte Klemmposition verstellt worden.

Mit seinem Befestigungsabschnitt 16 ist das Befestigungsrohr 2 in einer sich in Längsrichtung des Befestigungsrohr 2 erstreckenden Aufnahmenut 20 an der Außenseite des Wischerantriebsgehäuses 13 aufgenommen, wobei die Aufnahmenut 20, wie insbesondere aus Fig. 2 zu erkennen ist, zwei parallele Nutseitenwände 21, 22 aufweist. Für jeden Keil 14, 15 ist ein Durchgangsöffnungspaar 23, 24 vorgesehen.

In Fig. 2 ist eine entlang der Schnittlinie E - E gemäß Fig. 1 teilgeschnittene Ansicht von aus Übersichtlichkeitsgründen lediglich einigen Bauteilen der Wischanlage 1 aus Fig. 1 gezeigt. Zu erkennen ist das zylindrische Motorgehäuse 11, das am Getriebegehäuse 12 angeflanscht ist. Aus dem Getriebegehäuse 12 ragt eine Abtriebswelle 25 heraus, an der eine in Fig. 1 gezeigte Kurbelplatte 26 des Kurbelgestänges 9 festlegbar ist.

In Fig. 2 ist das in der U-förmig konturierten Aufnahmenut 20 aufgenommene Befestigungsrohr 2 gezeigt, das vor der Montage auch in seinem Befestigungsabschnitt 16 kreisrund konturiert war. Die Keile 14, 15 sind derart eingebracht, dass jeweils eine sich quer zur Längserstreckung des Befestigungsrohres 2 erstreckende Delle im Befestigungsrohr 2 gebildet ist, das Befestigungsrohr 2 also bei dem Einbringen der Keile 14, 15 im Bereich der Keile 14, 15 plastisch verformt wurde, derart, dass das Befestigungsrohr 2 nicht nur am Nutboden 27 der Aufnahmenut 20, sondern auch an den Innenseiten der Nutseitenwände 21, 22 anliegt, so dass in der Folge ein Verdrehen des Wischerantriebs 10 relativ zu dem Befestigungsrohr 2 unmöglich ist.

Wie sich aus Fig. 2 weiter ergibt, weisen die Keile 14, 15 jeweils vier rechtwinklig zueinander angeordnete Seitenflächen auf, die zu einer Keilspitze 17, 18 hin aufeinander zulaufen. Es ist auch eine Ausführungsform realisierbar, bei der zwei einander gegenüberliegende, vorzugsweise seitliche, Seitenflächen parallel zueinander in Längserstreckung des Keils 14, 15 verlaufen und sich lediglich zwei Seitenflächen annähern. Die Keile 14, 15 liegen jeweils mit einer unteren Flachseite 28 am Befestigungsrohr 2 und mit einer winklig zu dieser verlaufenden, oberen Flachseite 29 am Innenumfang der Durchgangsöffnungen 23, 24 an und bewirken somit eine Klemmung des Befestigungsrohrs 2 in der Aufnahmenut 20.

## Patentansprüche

1. Wischanlage für ein Kraftfahrzeug, mit einem Wischerantriebsgehäuse (13), das an einem Befestigungsrohr (2) festgelegt ist
**dadurch gekennzeichnet,**
**dass** das Wischerantriebsgehäuse (13) mit mindestens einem Keil (14, 15) form- und/oder reibschlüssig am Befestigungsrohr (2) festgelegt ist.

2. Wischanlage nach Anspruch 1,
**dadurch gekennzeichnet,**
**dass** der Keil (14, 15) am Außenumfang des Befestigungsrohrs (2) anliegend angeordnet ist.

3. Wischanlage nach einem der Ansprüche 1 oder 2,
**dadurch gekennzeichnet,**
**dass** der Keil (14, 15) mit einer Flachseite (28, 29) am Befestigungsrohr (2) anliegt.

4. Wischanlage nach einem der vorhergehenden Ansprüche,
**dadurch gekennzeichnet,**
**dass** die Umfangskontur des Keils (14, 15), zumindest abschnittsweise, polygonförmig, insbesondere rechteckig, ist.

5. Wischanlage nach einem der vorhergehenden Ansprüche,
**dadurch gekennzeichnet,**
**dass** der Keil (14, 15) derart montiert ist, dass dieser die Umfangskontur, des vorzugsweise zuvor kreisförmig konturierten, Befestigungsrohres (2) elastisch und/oder plastisch verformt und das Befestigungsrohr (2) klemmt.

6. Wischanlage nach einem der vorhergehenden Ansprüche,
**dadurch gekennzeichnet,**
**dass** sich der Keil (14, 15) quer zur Längserstreckung des Befestigungsrohres (2) in einem Befestigungsabschnitt (16) erstreckt.

7. Wischanlage nach einem der vorhergehenden Ansprüche,
**dadurch gekennzeichnet,**
**dass** der Keil (14, 15) mindestens eine, insbesondere polygonförmig konturierte, Durchgangsöffnung (23, 24), vorzugsweise zwei voneinander beabstandete Durchgangsöffnungen (23, 24), im Wischerantriebsgehäuse (13) des Wischerantriebs (10) durchsetzt.

8. Wischanlage nach einem der vorhergehenden Ansprüche,
**dadurch gekennzeichnet,**
**dass** der Keil (14, 15) mit Sicherungsmitteln gegen Lösen gesichert ist.

9. Wischanlage nach einem der vorhergehenden Ansprüche,
**dadurch gekennzeichnet, dass** mindestens zwei, vorzugsweise ausschließlich zwei, in Richtung der Längserstreckung des Befestigungsrohres (2) voneinander beabstandete, Keile (14, 15) zum Fixieren des Wischerantriebs (10) am Befestigungsrohr (2) vorgesehen sind.

10. Wischanlage nach einem der vorhergehenden Ansprüche,
**dadurch gekennzeichnet,**
**dass** das Befestigungsrohr (2) eine Aufnahmenut (20) des Wischerantriebsgehäuses (13) durchsetzend angeordnet ist.

11. Verwendung eines Keils (14, 15) zum form- und/oder reibschlüssigen Festlegen eines Wischerantriebsgehäuses (13) eines Wischerantriebs (10) einer Wischanlage (1) an einem Befestigungsrohr (2).

12. Montageverfahren zum Festlegen eines Wischerantriebsgehäuses (13) eines Wischerantriebs (10) einer Wischanlage (1) an einem Befestigungsrohr (2),
**dadurch gekennzeichnet,**
**dass** das Wischerantriebsgehäuse (13) mit mindestens einem Keil (14, 15) form- und/oder reibschlüssig am Befestigungsrohr (2) festgelegt wird.

13. Montageverfahren nach Anspruch 12,
**dadurch gekennzeichnet, dass** der Keil (14, 15) derart montiert wird, dass dieser dabei die Umfangskontur, des vorzugsweise zuvor kreisförmig konturierten, Befestigungsrohres (2) elastisch und/oder plastisch verformt und das Befestigungsrohr (2) klemmt.
